# DEMANDE DE BREVET EUROPEEN

(11) **EP 0 847 161 A1**
(43) Date de publication de la demande: **10.06.1998**
(21) Numéro de dépôt: 96402618.1
(22) Date de dépôt: 04.12.1996
(51) Int. Cl.: H04K 3/00, G01S 3/74

(54) **Equipement pour l'interception, la goniométrie et la localisation d'émissions radioélectriques large bande**

(71) Demandeur: THOMSON-CSF, 75008 Paris (FR)
(72) Inventeur: Previ, Gérard, c/o Thompson-CSF, SCPI, 94117 Arcueil Cedex (FR); Multedo, Gilbert, c/o Thompson-CSF, SCPI, 94117 Arcueil Cedex (FR); Devaux, Dominique, c/o Thompson-CSF, SCPI, 94117 Arcueil Cedex (FR)
(74) Mandataire: Lincot, Georges

(57) **Abrégé**

L'équipement comprend un système antennaire (1) couplé à un dispositif de visualisation (6) au travers d'un dispositif de réception (2), d'un circuit d'acquisition (3), d'un circuit d'extraction (4), et d'un dispositif d'exploitation (5) reliés dans cet ordre en série pour identifier et caractériser les angles, les instants d'arrivée et le type des émissions reçues. Le circuit d'acquisition (3) et le circuit d'extraction (4) sont architecturés autour d'une structure d'opérateurs réalisés à partir de processeurs de traitement du signal de type MIMD permettant d'exécuter des instructions différentes sur des données différentes au cours d'un même cycle de traitement. Cette structure est organisée autour d'un anneau comportant un premier segment d'opérateurs pour effectuer l'analyse spectrale par transformée de Fourier rapide des signaux reçus du système antennaire (1), un deuxième segment d'opérateurs pour effectuer des traitements d'antennes pour détecter les émetteurs et effectuer les calculs de goniométrie et un troisième segment d'opérateurs composant le circuit d'extraction (4) pour traiter en temps réel les informations de radiogoniométrie fournies par le bloc d'acquisition et fournir des comptes rendus de détection au dispositif d'exploitation (5).

Les applications sont celles de la radiolocalisation.

## Description

La présente invention concerne un équipement pour l'interception la goniométrie et la localisation d'émissions radioélectriques large bande.

Les techniques de surveillance d'un spectre de fréquence consiste en général à assembler un réseau de récepteurs à un réseau de goniomètres sous contrôle d'un centre directeur. Les récepteurs utilisés procèdent par analyse spectrale de type séquentiel, à bande étroite et présentent de ce fait une vitesse d'interception limitée. Les goniomètres permettent la détermination des directions d'arrivées des diverses émissions interceptées mais leurs temps de réaction souvent élevés font qu'ils délivrent le résultat en temps différé. De ce fait les systèmes ainsi réalisés ont à la fois les vitesses d'interception et d'identification forts limitées et ne se trouvent adaptés qu'aux émissions de durées longues (plusieurs secondes) dont les fréquences correspondantes sont connues généralement a priori pour permettre d'identifier l'émetteur ou le reseau à partir desquels elles sont générées. La mesure instantanée de l'angle d'arrivée d'un grand nombre d'émissions simultanées à durées courtes par exemple par rafales de 10 à 100 ms et à évasion rapide de fréquence où la vitesse de saut est supérieure à 100 Hz, s'avère impossible à réaliser avec ces types de systèmes à cause de la grande perte d'informations imputable à leur temps de réponse.

L'invention a pour objet un équipement permettant de remédier aux difficultés précitées c'est-à-dire permettant l'analyse en temps réel et sur le site de tous types d'émissions connues ou inconnues de durées courtes et à évasion rapide de fréquence.

A cet effet l'invention a pour objet un équipement pour l'interception, la goniométrie et la localisation d'émissions radioélectriques du type comprenant un système antennaire couplé à un dispositif de visualisation au travers d'un dispositif de réception, d'un circuit d'acquisition, d'un circuit d'extraction, et d'un dispositif d'exploitation reliés dans cet ordre en série pour identifier et caractériser les angles, les instants d'arrivée et le type des émissions reçues caractérisé en ce que le circuit d'acquisition et le circuit d'extraction sont architecturés autour d'une structure d'opérateurs réalisés à partir de processeurs de traitement du signal de type MIMD permettant d'exécuter des instructions différentes sur des données différentes au cours d'un même cycle de traitement organisée autour d'un anneau, comportant reliés à l'anneau un premier segment d'opérateurs pour effectuer l'analyse spectrale par transformée de Fourier rapide des signaux reçus du système antennaire, un deuxième segment d'opérateurs pour effectuer des traitements d'antennes pour détecter les émetteurs et effectuer les calculs de goniométrie et un troisième segment d'opérateurs composant le circuit d'extraction pour traiter en temps réel les informations de radiogoniométrie fournies par le bloc d'acquisition et fournir des comptes rendus de détection au dispositif d'exploitation.

L'invention sera mieux comprise et d'autres caractéristiques apparaîtront à l'aide de la description qui suit faite en référence aux figures annexées qui représentent :
- La figure 1 un découpage en blocs fonctionnels d'un équipement d'interception et de goniométrie d'émissions et de localisation d'émetteurs selon l'invention ;
- La figure 2 un schéma détaillé de l'organisation fonctionnelle représentée à la figure 1 ;
- La figure 3 une base interférométrique formée par cinq aériens d'un réseau antennaire conforme à celui représenté à la figure 2 ;
- La figure 4 un schéma de réalisation d'un récepteur selon l'invention ;
- La figure 5 un mode de réalisation selon l'invention d'un bloc d'acquisition ;
- La figure 6 un organigramme schématisant de façon générale les traitements effectués par un bloc d'acquisition ;
- La figure 7 un mode de réalisation selon l'invention d'un bloc d'extraction ;
- La figure 8 un organigramme illustrant les traitements effectués par le bloc d'extraction ;
- La figure 9 un organigramme pour illustrer l'algorithme mis en oeuvre par l'invention pour reconnaître des émissions en évasion de fréquence ;
- La figure 10 un organigramme pour illustrer un processus de suivi chromatique de piste selon l'invention ;
- La figure 11 un organigramme pour illustrer un processus de localisation par corrélation de piste selon l'invention ;
- La figure 12 un diagramme des temps pour illustrer le séquencement des opérations de localisation en mode automatique selon l'invention ;
- La figure 13 un mode de réalisation selon l'invention d'un bloc d'exploitation.

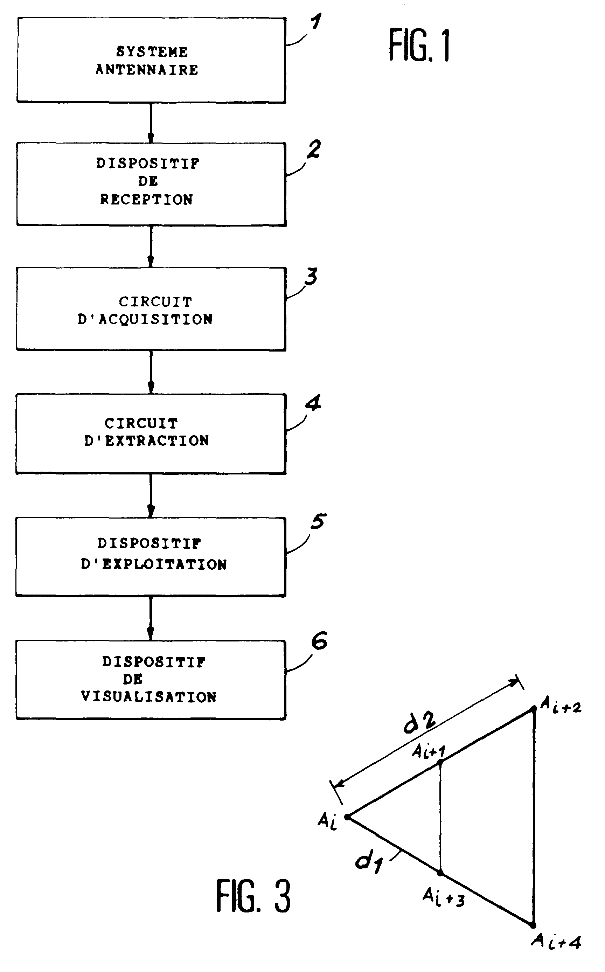

L'architecture générale de l'équipement d'interception d'émission et de localisation des émetteurs selon l'invention qui est représentée à la figure 1 comporte un système antennaire 1, un dispositif de réception 2 un circuit d'acquisition 3, un circuit d'extraction 4, un dispositif d'exploitation 5 et un dispositif de visualisation 6, l'ensemble de ces circuits étant couplés dans cet ordre en série. Le système antennaire 1 fournit un ensemble de signaux de réception permettant d'effectuer un calcul de l'angle d'arrivée de chaque émission basé sur la mesure des phases différentielles existantes entre ces différents signaux. Le dispositif de réception 2 est relié au système antennaire 1 et comprend plusieurs voies de réception qui transposent, filtrent et amplifient les signaux provenant du système antennaire en parallèle. Les sorties des voies de réception ainsi définies sont reliées aux entrées correspondantes du circuit d'acquisition 3. Le circuit d'acquisition 3 a pour mission d'effectuer l'analyse spectrale des signaux fournis par le dispositif de réception 2, de détecter l'énergie cohérente des signaux existants sur chaque canal analysé, et d'intégrer les déphasages entre voies analysées. Il a également pour mission d'effectuer les traitements d'antennes et de goniométrie par interférométrie à large base pour déterminer l'azimut et l'angle de site des émissions détectées et enfin d'effectuer la détection rapide d'alarmes préprogrammées en fréquence et azimut et les calculs élémentaires liés à la reconnaissance de modulation d'émissions particulières.

Les sorties du circuit d'acquisition 3 sont reliées au circuit d'extraction 4 qui a pour fonction de regrouper les détections élémentaires d'acquisition dans un espace à trois dimensions, fréquence, azimut, temps pour en extraire les émetteurs actifs. A cette fin les paramètres de fréquence centrales, azimut moyen, amplitude, rapport signal à bruit sont calculés sur une durée d'intégration déterminée, de l'ordre de 1,5 secondes par exemple, qui constitue le cycle de base de travail du circuit d'extraction. Le circuit d'extraction 4 a pour rôle d'effectuer les tris amonts sur les paramètres fréquence, azimut et amplitude pour optimiser le domaine utile à traiter, à rechercher les émetteurs séparés en azimut et à intercepter sur le même canal. Il permet de regrouper en fréquence des émissions étalées sur plusieurs canaux adjacents, à trier en durée des plots de détection issus des regroupements en effectuant un tri en deux classes, par rapport à une limite temporelle T0 prédéterminée pour que les plots de durées supérieures à cette durée soient orientés vers un traitement d'émission à fréquence fixe de durée longue. Il permet également de reconnaître les émissions en évasion de fréquence appliquées aux plots de durées inférieures à la durée prédéterminée T0 pour mettre en évidence des émissions EVF et déterminer leur paramètre, de gérer les alarmes rapides détectées par le circuit d'acquisition pour activer des récepteurs d'écoute ou activer des moyens d'analyse spécifiques et enfin de regrouper les paramètres permettant la reconnaissance de modulation à partir de calculs établis par le circuit d'acquisition. Ces derniers calculs permettent de déterminer sur toute la durée d'intégration le type de modulation de chaque plot détecté.

Enfin le circuit d'extraction 4 est relié au dispositif d'exploitation 5 qui est lui même couplé au dispositif de visualisation 6. Le dispositif d'exploitation 5 est formé par un calculateur temps réel qui a pour mission d'initialiser, séquencer et gérer les consignes nécessaires au fonctionnement général de l'équipement, à créer et suivre en temps réel des pistes correspondant aux émissions nouvelles à durées courtes et à évasions de fréquence, à gérer des moyens d'analyse externes mis en alarme par le circuit d'extraction 4 et enfin de gérer les échanges qui ont lieu avec un niveau supérieur d'exploitation. Le dispositif d'exploitation 5 permet également d'effectuer une mise en réseau de l'équipement avec d'autres équipements de localisation. A cet effet, il permet la gestion du réseau de localisation en veillant plus particulièrement à la mise a l'heure de toutes les stations du réseau et à la récupération des informations provenant des stations déportées du réseau ainsi que les traitements de corrélation et de localisation. A titre d'exemple, et selon un mode préféré de réalisation de l'invention, ces fonctions peuvent être organisées en trois modes, un mode I pour effectuer des comptes rendus de détection sur les émissions à fréquences fixes longues durées à destination de moyens de traitement externes, un mode II pour identifier des émissions nouvelles à durées courtes et évasions de fréquence et un mode III pour améliorer par la localisation le mode II des émissions nouvelles a durées courtes et évasions de fréquence en liaison avec un réseau de stations déportées. Dans le dispositif qui est décrit ci-après le mode I est simultané aux modes II et III. Le dispositif de visualisation 6 est relié au calculateur d'exploitation pour permettre les visualisations synthétiques des plots de détection d'émetteurs, des pistes et le dialogue homme-machine correspondant.

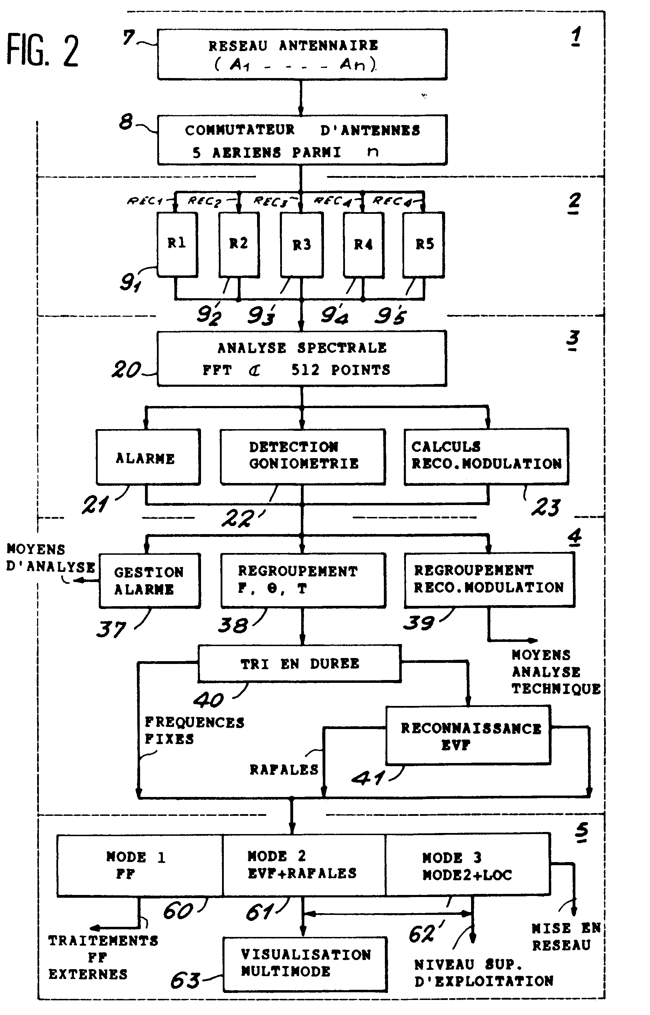

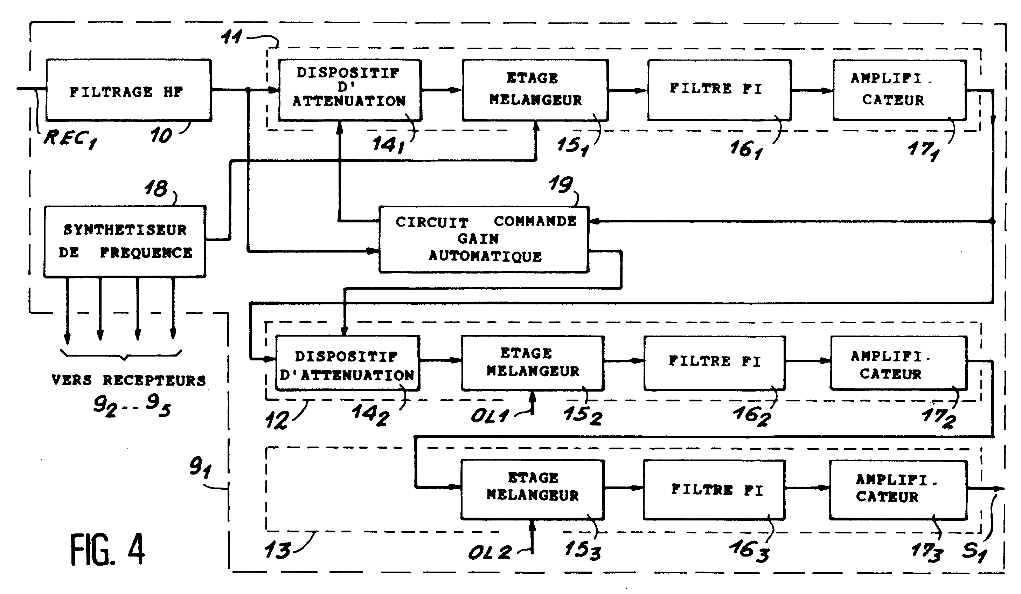

Un schéma fonctionnel plus détaillé de l'équipement selon l'invention est représenté à la figure 2. Le réseau antennaire 7 qui est représenté à la figure 2 est composé de n aériens large bande A₁ à Aₙ, disposés sur une base triangulaire d'interférométrie omnidirectionnelle. Suivant un mode préféré de réalisation de l'invention chaque aérien utilisé est formé par deux cadres actifs dont les signaux de sortie S₁ et S₂ sont combinés de façon connue dans un coupleur hybride en quadrature non représenté. Ce type d'aérien présente l'avantage qu'il permet une meilleure adaptation à la polarisation de signaux radioélectriques à angle de site élevé qu'un aérien monopole, et un meilleur gain en sensibilité pour des polarisations proches de l'horizontal et pour des angles de site élevés. Un motif de base du réseau est représenté sur la figure 3. Celui-ci est formé de cinq aériens Aᵢ à Aᵢ₊₄ disposés aux sommets de deux triangles équilatéraux imbriqués partageant le même sommet Aᵢ. Le commutateur d'antenne 8 qui est représenté sur la figure 2 permet de sélectionner les antennes par groupes de cinq en fonction des gammes de fréquence utilisées. Comme en radiogoniométrie classique le commutateur 8 assure l'application d'un signal de tarage en phase différentielle des cinq voies de réception et de l'ensemble des câbles de liaison reliant les cinq sorties du commutateur d'antenne 8 au dispositif de réception 2. Si comme le montre la figure 3, d₁ et d₂ désignent les longueurs des côtés de chacun des deux triangles équilatéraux, et λ max représente la longueur d'onde maximale des émissions détectées le choix des longueurs d₁ et d₂ est déterminé en fonction du rapport d₁/λ max et du rapport d₂/d₁ qui permet d'optimiser le taux de fausse alarme sur le levé d'ambiguïté à rapport signal à bruit faible compte tenu du choix du rapport d₁/λ max.

Le dispositif de réception est formé sur la figure 2 par cinq récepteurs à large bande référencés respectivement de 9₁ à 9₅ permettant ainsi une probabilité d'interception maximum des signaux en évasion de fréquence à caractère bref sur toute la bande étendue des fréquences d'analyse avec une vitesse d'interception maximum de l'ordre de 200 MHz par seconde. Chaque récepteur est organisé de la manière représentée à la figure 4 où le récepteur représenté comprend, une cellule de filtrage HF 10 suivie par trois chaînes d'amplification à fréquence intermédiaire 11, 12 et 13. Chaque chaîne d'amplification à fréquence intermédiaire exceptée la dernière comprend un dispositif d'atténuation 14ᵢ, un étage mélangeur de fréquence 15ᵢ, un filtre à fréquence intermédiaire 16ᵢ et un amplificateur de fréquence intermédiaire 17ᵢ. Chaque étage mélangeur 15ᵢ comporte une entrée reliée à un oscillateur local OL₁ ou OL₂ pour les étages mélangeurs 15₂ et 15₃ et par un synthétiseur de fréquence 18 pour l'étage mélangeur 15₁. Un circuit de commande de gain automatique 19 est interposé en parallèle sur l'étage fréquence intermédiaire 11 pour commander l'atténuation des atténuateurs 14₁ et 14₂ pour permettre un appariage en gain des voies de réception.

Les cinq signaux REC₁ à REC₅ provenant du commutateur d'antenne 8 sont appliqués au dispositif de réception 2. Ce dernier comporte cinq voies de réception R₁ à R₅ formées des récepteurs 9₁ à 9₅. Dans cette réalisation une seule voie de réception est définie comme maître et régule, grâce à un circuit de commande de gain automatique 19, le gain de sa propre voie et les quatre autres voies définies comme esclaves.

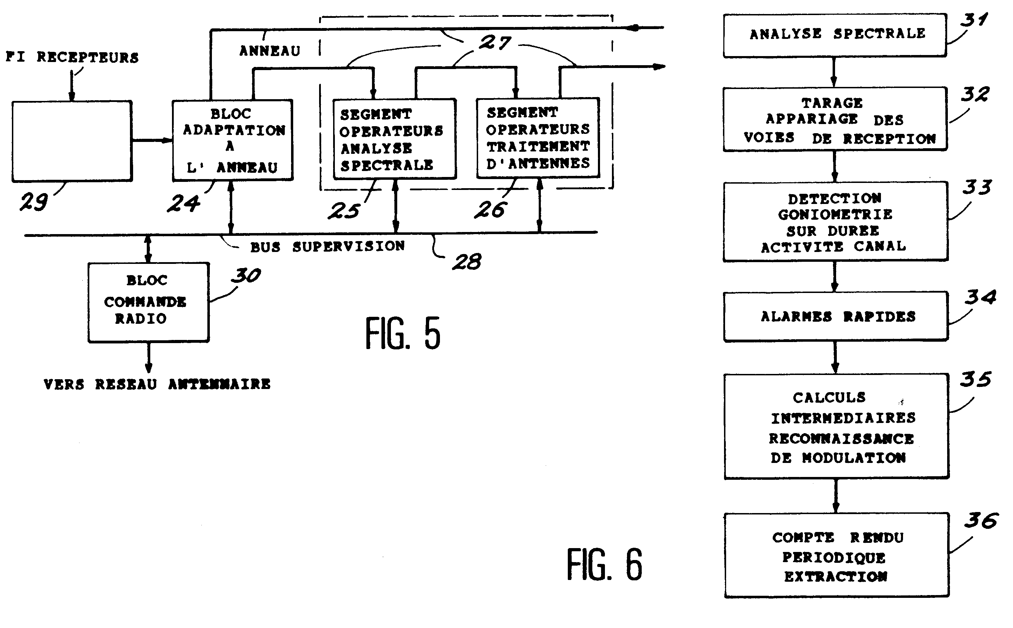

Le circuit d'acquisition 3 qui est représenté à la figure 2 comporte quatre blocs, un bloc 20 d'analyse spectrale, un bloc 21 de détection d'alarme, un bloc 22 de détection de goniométrie, et un bloc 23 de calcul de reconnaissance de modulation. Ces blocs sont réalisés au moyen de la structure à microprocesseurs qui est représentée à la figure 5 qui comporte trois ensembles de microprocesseurs de traitement du signal 24, 25 et 26 de type par exemple TMS320C25 et TMS320C30 commercialisés par le Société TEXAS INSTRUMENT, reliés entre eux par un anneau 27 et par un bus de supervision 28. Un bloc de conversion analogique-numérique 29 réalise l'interface entre les sorties S₁ à S₅ des récepteurs 9₁ à 9₅ et un bloc d'adaptation 24 à l'anneau 27. Cette structure a pour avantages de permettre un fort taux de parallélisme pour le traitement des données appliquées sur l'anneau 27, d'accepter des débits importants de données nécessitant un traitement immédiat sans perte d'information, de présenter des temps de réponse faibles pour le traitement des alarmes et d'autoriser un volume important d'échanges de données interne à l'équipement. L'architecture ainsi réalisée est une architecture type MIMD (Multiple Instruction Multiple Data) qui permet d'exécuter des instructions différentes sur des données différentes au cours d'un même cycle de traitement. Le bus supervision 28 est destiné aux échanges protocolaires et aux tests et l'anneau 27 permet le transfert de données à haute vitesse entre tous les abonnés de l'anneau (c'est-à-dire entre tous les microprogrammes en cours d'exécution exécutant des instructions sur des données transitant sur l'anneau). Les traitements du circuit d'acquisition sont répartis sur plusieurs opérateurs élémentaires en un micropipeline de segments de processeur SPMD, c'est-à-dire où les processeurs exécutent un même programme sur des données différentes.

A ce titre, l'ensemble de microprocesseurs 25 est programmé c'est-à-dire comporte un segment d'opérateurs pour exécuter les analyses spectrales par transformée de Fourier rapide du bloc 20 de la figure 2 des cinq voies de fréquence intermédiaire échantillonnées des récepteurs et l'ensemble des microprocesseurs 26 est programmé, c'est-à-dire comporte un segment d'opérateurs pour effectuer des traitements d'antennes permettant la détection des émetteurs et les calculs de goniométrie, le traitement des alarmes rapides, et la reconnaissance de modulation correspondant aux fonctionnalités des blocs 21, 22 et 23 de la figure 2. A partir de l'entrée des échantillons temporels sur l'anneau 27 jusqu'à la sortie des données sur l'anneau vers le circuit d'extraction 4, les flots de données d'un segment d'opérateurs vers un autre segment sont rigoureusement ordonnés par l'adressage des données sur l'anneau 27. Le microséquencement de la partie calculatoire est décentralisé au niveau des opérateurs eux-mêmes.

Le bloc d'adaptation 24 à l'anneau 27 qui est également couplé au bloc de conversion analogique numérique 29, assure le regroupement en tableaux des échantillons de signal avant leur transmission sur l'anneau 27 ainsi que la synchronisation des traitements dans les segments d'opérateurs.

Un bloc de commande 30 de la liaison radio vers les récepteurs 24 permet de fournir, à chaque récurrence élémentaire, les amplitudes et phases correspondant aux cinq voies en fréquence intermédiaire aux segments d'opérateurs réalisant le traitement d'antennes 26 calculés par le segment d'opérateurs réalisant l'analyse spectrale 25.

Le segment d'opérateurs 26 réalisant le traitement d antenne fournit au circuit d'extraction 4 par l'intermédiaire de l'anneau 27 les indications d'alarmes les émission détectées avec les paramètres associés et les résultats intermédiaires de reconnaissance de modulation.

Le bloc de commande radio 30 assure l'interface entre le bus de supervision 28 et le réseau antennaire 7. Les cinq signaux S₁ à S₅ en bande de fréquence intermédiaire provenant de chacun des récepteurs 9₁ à 9₅ sont échantillonnés par le bloc de conversion analogique-numérique 29 avant d'être appliqués au bloc d'adaptation en anneau 24. Ce bloc couplé aux récepteurs 9₁ à 9₅ confère au dispositif de réception une dynamique instantanée linéaire supérieure à 70dB. Ceci a pour avantage d'offrir une plus grande robustesse aux brouilleurs à forts niveaux. L'ensemble des traitements effectués par les processeurs de traitement de signaux 24 à 26 est figuré aux étapes 31 à 36 de l'organigramme de la figure 6.

Comme l'échantillonnage des signaux S₁ à S₅ a pour effet une périodisation de leur spectre à la fréquence d'échantillonnage, ces signaux subissent une pondération d'amplitude sur une période de temps déterminée au moyen d'une fenêtre de type Blackman ou de Hamming par exemple, de préférence à une fenêtre rectangulaire pour limiter en amplitudes les ondulations des raies dans le spectre résultant. Les cinq signaux numériques résultant composés par exemple de 2M points réels, sont analysés à l'étape 31 par transformée de Fourier rapide à M points complexes. Le calcul délivre alors 5 spectres de M canaux sur lesquels sont effectués de façon connue un calcul d'amplitude absolue, un calcul de phase absolue et un calcul des six phases différentielles des signaux reçus sur les 5 antennes du réseau antennaire sélectionné. Un appariage des voies de réception consistant à effectuer un tarage périodique des voies de réception pour annuler les phases différentielles parasites est alors effectué à l'étape 32.

Les résultats d'analyse obtenus après chaque commutation d'antennes donnant des phases différentielles identiques sont intégrés entre eux, d'une récurrence à l'autre à l'étape 33 pour que la précision du calcul de goniométrie qui est effectué à partir des valeurs phases différentielles obtenues soit adapté à la durée du signal présent dans chaque période de récurrence. Cette intégration permet d'effectuer une bonne discrimination signal/bruit, et fournit les éléments de base pour déterminer la valeur moyenne du bruit dans la bande d'analyse. Ainsi pour chaque émetteur détecté durant des périodes de récurrences successives les valeurs de déphasage, d'amplitude et de moyenne de bruit sont intégrées pour que le calcul de goniométrie qui est effectué sur les résultats de ces intégrations puisse donner des renseignements avec une précision suffisante sur la position en site et en azimut de l'émetteur, sur l'amplitude de l'émission, sur l'activité temporelle de chaque tranche de récurrence élémentaire, sur la valeur moyenne du bruit et sur l'écart type des mesures en azimut.

L'activité temporelle est cumulée sur toutes les détections afin de déterminer les dates de début et fin et la durée de chaque émission.

A l'étape 34 les fausses alarmes sont détectées, de façon connue par des seuils dépendant de la durée, du rapport signal à bruit de détection et de la probabilité de brouillage de l'émission. Les signaux relatifs à chaque émetteur détecté sont transmis au circuit d'extraction 4. Un traitement des alarmes rapides est également effectué sur chaque canal à chaque récurrence élémentaire. Ce traitement consiste à effectuer des tris en fréquences et en azimut des émissions détectées.

A l'étape 35 un traitement de reconnaissance de modulation est effectué pour permettre à l'étape 36 l'extraction des émissions et leur classement éventuel par type de modulation.

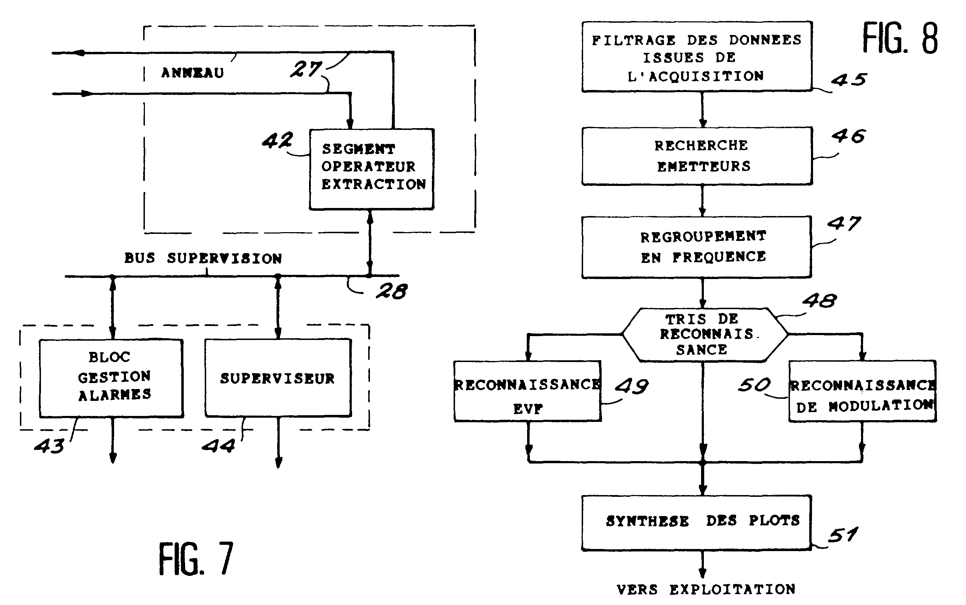

Le circuit d'extraction qui est représenté à la figure 2 comporte un bloc de gestion d'alarmes 37, un bloc de regroupement 38 en fréquence, azimut et durée des émissions, un bloc de regroupement 39 des modulations reconnues, un bloc de tri en durée 40, et un bloc de reconnaissance 41 d'émissions en évasion de fréquence. Il a pour rôle de traiter en temps réel les informations de radiogoniométrie fournies par le bloc d'acquisition pour fournir un compte rendu de détection au poste d'exploitation. La commande de l'extraction est réalisée par le dispositif d'exploitation 5. Les blocs 37 à 41 sont réalisés au moyen de la structure microprogrammée qui est représentée à la figure 7 qui comporte, organisés autour du bus superviseur 28, un microprocesseur de traitement de signal 42 pour effectuer les traitements d'extractions proprement dit, et deux microprocesseurs 43 et 44 composant l'un, un bloc de gestion d'alarmes 43 et l'autre, un bloc superviseur 44.

Le microprocesseur 42 est également couplé à l'anneau 27 pour effectuer les traitements d'extraction sur les données appliquées sur l'anneau 27 par le circuit d'acquisition 3 représenté à la figure 5.

A cette fin le microprocesseur 42 est convenablement programmé pour effectuer l'extraction proprement dite des émetteurs à partir des détections issues du circuit d'acquisition 3 et créer des plots résultats des regroupements effectués en gisement et en fréquence. Dans ce traitement chaque plot caractérise un émetteur par exemple, par sa fréquence centrale, sa largeur de bande, son amplitude d'émission son azimut corrigé, son site, ses dates de début et de fin d'émission et son type de modulation. Le microprocesseur 42 est également programmé pour effectuer des tris sur les plots ainsi créés et reconnaître par exemple des modulations à partir de sous ensembles de plots issus des tris, ou des émetteurs émettant en évasion de fréquence.

Les traitements correspondants sont figurés aux étapes 45 à 51 de la figure 8. Après regroupement les plots de détections sont soumis à un tri en durée qui permet la discrimination entre émissions longues ou brèves par rapport à une limite.

Ce tri nécessite un historique à court terme de la période d'extraction précédente, afin d'éliminer les fins d'émissions à fréquence fixe et ne pas les considérer comme des émissions brèves. Il est nécessaire de tenir compte du rapport signal à bruit et du nombre d'apparitions de l'émission afin de ne pas considérer par exemple comme une suite d'émissions brèves une émission de type FF à fréquence fixe.

Après le tri en durée les émetteurs à fréquence fixe sont aiguillés vers le dispositif d'exploitation 5.

La reconnaissance des émissions en évasion de fréquence (EVF) effectuée à l'étape 49 a pour but d'identifier les émetteurs à évasion de fréquence présents parmi les émissions brèves détectées par le tri en durée.

Le traitement de reconnaissance des émissions en évasion de fréquence s'effectue dans un espace azimut, temps et largeur de bande qui permet de filtrer les phénomènes impulsionnels larges bandes les fréquences fixes FF en limite de sensibilité et les émissions glissantes en fréquence.

Après filtrage, l'ensemble des plots résultants sont chaînés afin d'élaborer la cohérence spatiale des paliers EVF.

La validation d'un émetteur EVF est effectuée sur des critères de qualité associés à chaque chaîne construite.

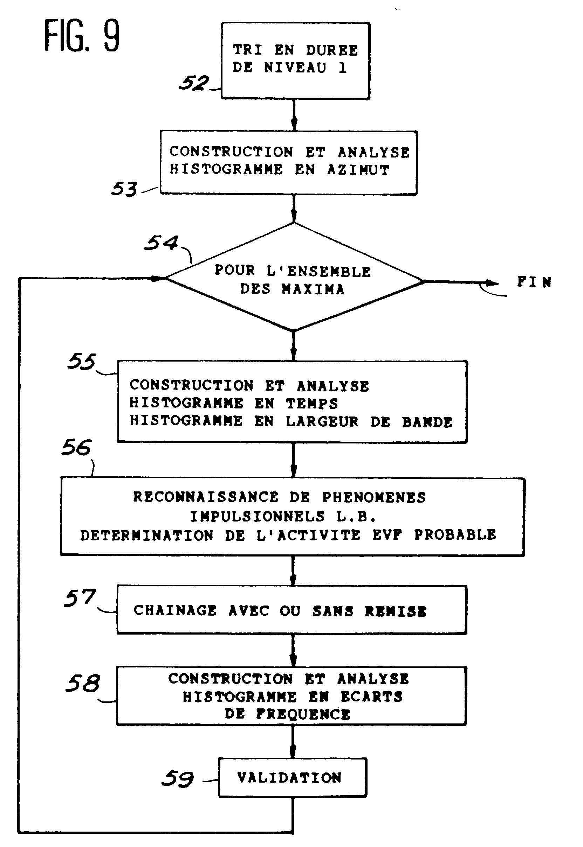

Le traitement de reconnaissance EVF est figuré par les étapes 52 à 59 de l'organigramme de la figure 9.

Le traitement de reconnaissance de modulation qui est effectué à l'étape 50 a pour but de reconnaître les modulations suivantes : A0, A1, A3, F3, A3J±, A3H±, A3B, F1, bruit.

Ce traitement a lieu par application de la méthode connue de Bayes qui permet de résoudre ce problème avec un risque d'erreur de classification minimal.

Le bloc d'exploitation qui est représenté à la figure 2 comporte des blocs d'exploitation 60 à 62 des modes I, II et III précités en relation avec un bloc de visualisation multimode 63.

Dans le mode I, le dispositif d'exploitation est au service de moyens classiques d'interception auxquels elle est connectée.

Les plots de détection correspondant, triés par le circuit d'extraction, ne sont pas traités mais simplement aiguillés vers tous moyens spécifiques connus et non représentés intégrés aux chaînes d'interception pour l'écoute et la localisation.

Les modes de visualisations graphiques temps réel se renouvellent au rythme des cycles d'extraction. Ceux-ci ont les formes de graphes ou tableaux non représentés fréquence-azimut, fréquence-temps, azimut-temps, piste-temps établis au choix en fonction des pistes, des plots de détection, ou des plots associés aux pistes pour les trois premiers types de tableaux.

Le mode II comprend deux sous-modes : un mode complètement automatique ne nécessitant pas d'intervention d'opérateur et un mode interactif avec opérateur.

Dans le mode II, le dispositif d'exploitation 5 et le poste de visualisation 6 travaillent sur des plots de détection de durée inférieure à la limite Tₒ définie précédemment.

Le mode II automatique est utilisé par les stations déportées mises en réseau de localisation.

Le mode interactif avec opérateur utilise les mêmes fonctions de base que le mode automatique.

Dans le mode complètement automatique le traitement de piste fonctionne sur une durée fixe Tp et avec une récurrence de gestion de piste choisie par l'opérateur à l'initialisation.

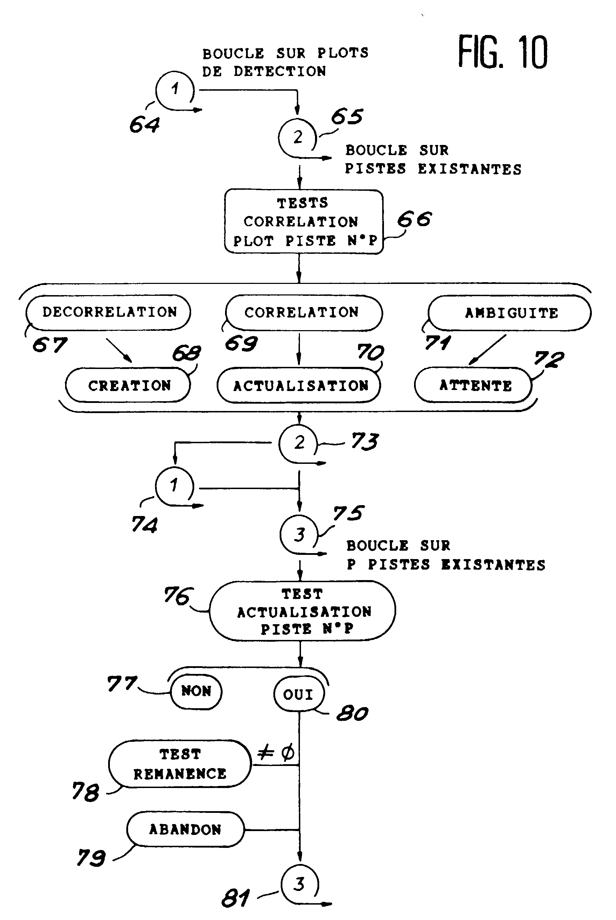

Le principe général du suivi de piste automatique est représenté aux étapes 64 a 81 de la figure 10.

L'apparition, la continuité ou la disparition d'un émetteur sont déterminées sur les critères de corrélation/décorrélation entre les identifications de plots de détection d'incident et les attributs des pistes déjà identifiés dans l'exploitation, de discontinuité temporelle dans l'activité d'une piste et d'abandon d'une piste.

Le suivi de piste est soumis aux règles d'actualisation, de création et d'attente de création/actualisation d'une piste.

Si les tests de corrélation conduisent à un résultat ambigu, le plot et ses identifiants sont stockés en attente de configuration/information du biais au cycle d'extraction suivant :
Chaque piste possède une rémanence propre paramétrable et modifiable par l'opérateur.

En mode automatique, les visualisations nécessaires au contrôle du fonctionnement sont synthétiques et concernent les seules données de piste (fréquence-azimut, piste-temps).

Dans le mode III l'exploitation est dédiée à la fonction localisation des émissions brèves et EVF.

Le principe de la mise en réseau de localisation est basé sur la corrélation entre les données de pistes élaborées en synchronisme sur tous les dispositifs du réseau.

Les traitements de localisation mis en oeuvre comportent une partie gestion du réseau de localisation et une partie de calculs de localisation. La partie gestion du réseau de localisation comporte la synchronisation des stations déportées l'envoi des consignes de veille, le transfert des données d'interception (pistes) des stations déportées vers la station centrale.

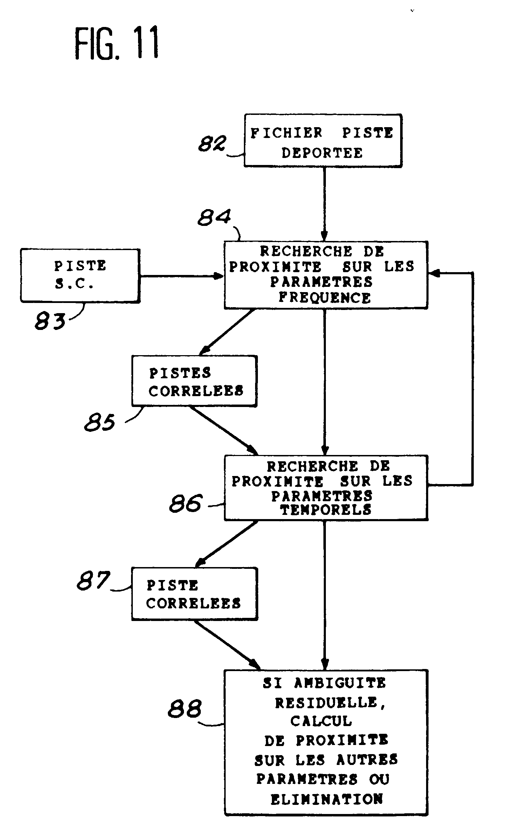

Les calculs de localisation comprennent la corrélation des interceptions réalisées dans les N stations du réseau représentée aux étapes 82 à 88 de la figure 11 et le calcul des coordonnées de l'émetteur à partir des valeurs azimut (θ) et site (Δ).

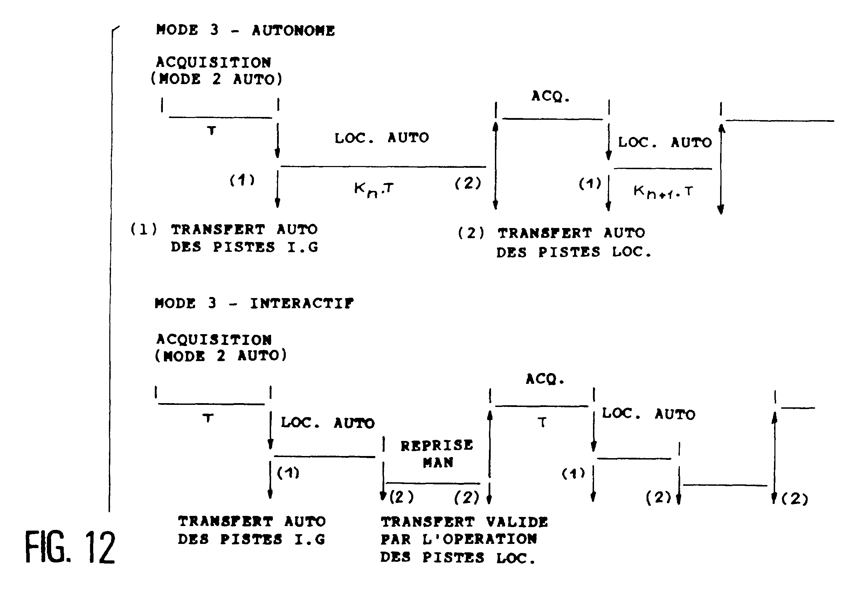

Une séquence complète de localisation, dans le mode III se compose de la manière représentée à la figure 12 d'une phase d'acquisition des données, d'une phase de calcul de localisation, d'une phase de reprise manuelle de ces calculs pour lever les éventuelles ambiguïtés dans lesquelles deux sous modes automatique et interactif sont à distinguer. Dans le sous mode III automatique les phases "acquisition" et "localisation" ont lieu séquentiellement sans intervention de l'opérateur.

La transmission des résultats est faite systématiquement, que la localisation soit ou non réussie.

Dans le mode III interactif le séquencement et le contrôle de la phase de localisation dépendent alors en partie de l'opérateur.

La phase acquisition est identique au mode III automatique et la phase localisation autorise une reprise manuelle des localisations non réussies.

Dans un premier temps le processus est mené jusqu'à son terme. Les résultats sont présentés à l'opérateur avant tout transfert.

Celui-ci peut alors pour chaque piste, que la localisation soit ou non considérée comme réussie, visualiser les résultats intermédiaires, transférer un résultat à un niveau supérieur d'exploitation, effectuer une reprise manuelle de l'une ou l'autre des processus de base corrélation et localisation.

Pour les reprises de corrélation l'opérateur dispose de fichiers pistes de chaque station.

Les visualisations proposées à l'opérateur et les moyens d'aide à la décision sont des visualisations graphiques temps réel lorsque le processus se déroule de façon automatique, des visualisations de dialogue alphanumériques et graphiques pour les reprises manuelles corrélation et localisation. Dans le premier cas, on représente sur un fond de carte le résultat des calculs de localisation effectués sur chaque piste et ce à chaque séquence de localisation. Dans le deuxième cas, les traitements ont lieu en temps différé.

Les informations présentées comprennent
- une liste des pistes de chaque station,
- une comparaison des paramètres de piste,
- une indication des degrés de corrélation, une présentation fréquence-temps des plots de détection de deux pistes de deux stations dont la corrélation est ambiguë.
   et une présentation en [x,y] des tirs gonios des N stations sur une piste donnée avec indication de l'ellipse d'incertitude.

A l'issue de ce travail, l'opérateur valide sélectivement les résultats à transmettre au niveau supérieur d'exploitation.

Les traitements automatiques et semi-automatiques ont accès à la même base de données.

Pour éviter les conflits les deux fonctions constituent deux tâches différentes et se déroulent de façon parallèle.

Elles sont découplées par une recopie de l'ensemble de la base de données en fin de cycle "suivi de piste".

Cette solution outre le fait d'être adaptée au concept temps réel de l'exploitation possède l'avantage de ne perdre aucune information de détection et de conserver la corrélation temporelle (ordre et temps d'arrivée) des plots de détection.

Un traitement déclenché n'inhibe alors que la seule partie visualisation et travaille sur la base de données existante à un instant donné, après recopie.

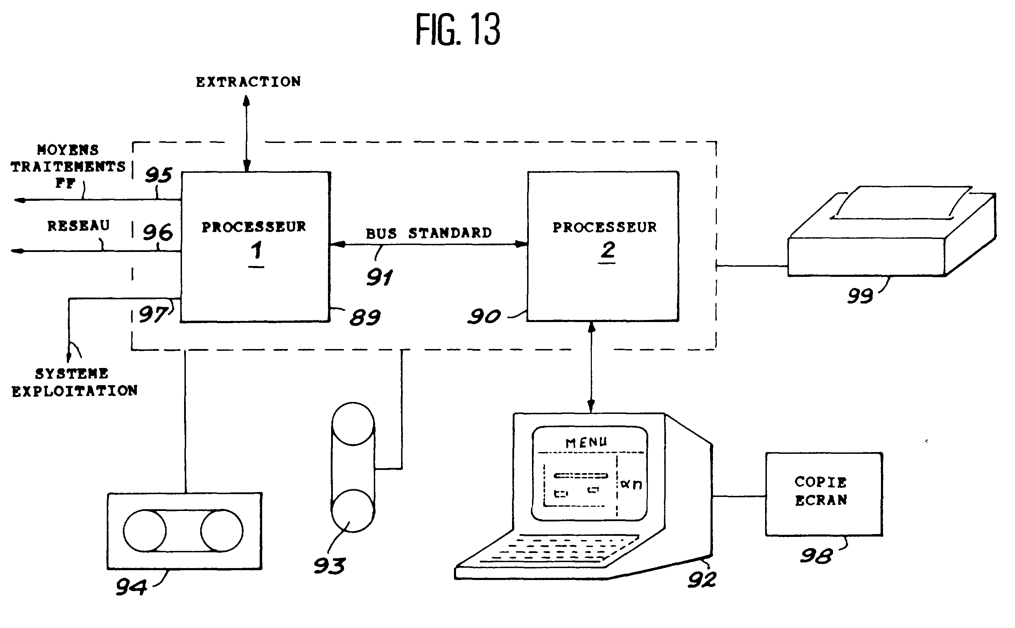

L'ensemble des traitements effectués par le dispositif d'exploitation est réalisé au moyen de la structure programmée représentée à la figure 13 qui comporte : deux processeurs de traitement 89, 90 reliés entre eux par un bus standard, 91, et un poste de visualisation 92.

Les deux processeurs de traitement 89, 90 sont regroupés au sein d'une même configuration matérielle disposant de périphériques communs composés de mémoires de masse, 93, 94 comportant un disque dur, une bande magnétique, et une imprimante rapide 99.

Cette structure dispose d'une liaison 95 avec des systèmes de traitement externes pour les fréquences fixes d'une liaison 96 avec d'autres dispositifs déportés pour la mise en réseau, et d'une liaison 97 avec un étage d'exploitation de niveau supérieur.

Le poste de visualisation 92 est constitué par une console de visualisation graphique couleur munie d'un ensemble clavierboule roulante pour le dialogue opérateur et d'une recopie d'écran 98.

Parmi les deux processeurs, le processeur 89 est dédié aux traitements automatiques en temps réel. A cette fin il permet l'aiguillage des comptes rendus de détection d'émissions à fréquence fixe vers des moyens de traitement externes en mode I, le suivi des pistes des émetteurs à évasion de fréquence et de durée courte en temps réel (au rythme des cycles extraction en mode II), et des traitements de corrélation et de localisation en mode III.

Le processeur 90 est dédié aux traitements graphiques temps réel et aux traitements semi-automatiques sur intervention de l'opérateur. Il permet des visualisations graphiques temps réel au rythme des cycles extraction, une reprise du suivi de pistes désignées par l'opérateur en temps différé, des traitements graphiques demandés par l'opérateur sur image mémorisée en temps différé.

## Revendications

1. Equipement pour l'interception, la goniométrie et la localisation d'émissions radioélectriques du type comprenant un système antennaire (1) couplé à un dispositif de visualisation (6) au travers d'un dispositif de réception (2), d'un circuit d'acquisition (3), d'un circuit d'extraction (4), et d'un dispositif d'exploitation (5) reliés dans cet ordre en série pour identifier et caractériser les angles, les instants d'arrivée et le type des émissions reçues caractérisé en ce que le circuit d'acquisition et le circuit d'extraction sont architectures autour d'une structure d'opérateurs réalisés à partir de processeurs de traitement du signal de type MIMD permettant d'exécuter des instructions différentes sur des données différentes au cours d'un même cycle de traitement organisée autour d'un anneau (27), comportant reliés à l'anneau un premier segment d'opérateurs pour effectuer l'analyse spectrale par transformée de Fourier rapide des signaux reçus du système antennaire (1), un deuxième segment d'opérateurs pour effectuer des traitements d'antennes pour détecter les émetteurs et effectuer les calculs de goniométrie et un troisième segment d'opérateurs (42) composant le circuit d'extraction (4) pour traiter en temps réel les informations de radiogoniométrie fournies par le bloc d'acquisition et fournir des comptes rendus de détection au dispositif d'exploitation (5).

2. Equipement selon la revendication 1 caractérisé en ce que le dispositif de réception (2) comporte une pluralité de récepteurs large bande (9₁ ... 9₅) couplés au système antennaire (1).

3. Equipement selon la revendication 2 caractérisé en ce que les récepteurs (9₁ ... 9₅) permettent une dynamique instantanée d'analyse supérieure à 70dB pour augmenter la robustesse au brouillage.

4. Equipement selon l'une quelconque des revendications 1 à 3 caractérisé en ce que les segments d'opérateurs sont structurés pour exécuter des mêmes programmes sur des données différentes.

5. Equipement selon l'une quelconque des revendications 1 à 4 caractérisé en ce que le dispositif de réception (2) est couplé au circuit d'acquisition (3) au travers d'un bloc de conversion de signaux analogiques numériques (29).

6. Equipement selon la revendication 5 caractérisé en ce que le circuit d'acquisition comprend un bloc d'adaptation d'anneau programmé (24) relié au bloc de conversion de signaux analogiques numériques (23).

7. Equipement selon l'une quelconque des revendications 1 à 6 caractérisé en ce que le circuit d'acquisition comprend un bloc de commande radio (30) et en ce que le circuit d'extraction comprend un bloc de gestion d'alarmes (43) et un superviseur (44) reliés aux segments d'opérateurs du circuit d'acquisition et du circuit d'extraction ainsi qu'au sous bloc d'adaptation à l'anneau (24) par l'intermédiaire d'un bus supervision (28).

8. Equipement selon l'une quelconque des revendications 1 à 7 caractérisé en ce que le système antennaire est relié au dispositif de réception au travers d'un commutateur d'antennes (8) pour relier sélectivement les antennes du système antennaire au dispositif de réception (2).

9. Equipement selon l'une quelconque des revendications 1 à 8 caractérisé en ce que le circuit d'acquisition (3) est programmé pour effectuer l'analyse spectrale (20) des signaux fournis par le dispositif de réception, traiter les alarmes (21) effectuer les calculs de goniométrie (2) sur chaque raie de spectre fournie par l'analyse spectrale, et effectuer des calculs de reconnaissance de modulation (23).

10. Equipement selon la revendication 9 caractérisé en ce que le circuit d'extraction (4) est programmé pour effectuer :
la gestion des alarmes (37), les regroupements en fréquence, azimut, site, et durée es émissions détectées, les regroupements (39) des modulations reconnues, et le tri des fréquences fixes, des émission brèves émissions à évasion de fréquence (41).

11. Equipement selon l'une quelconque des revendications 1 à 10 caractérisé en ce que le dispositif d'exploitation comporte une structure biprocesseur (89) et (90) programmée pour effectuer
- dans un premier mode des comptes rendus de détection sur les émissions à fréquences fixes longues durées
- dans un deuxième mode pour identifier les émissions nouvelles à durées courtes et en évasion de fréquence
- et dans un troisième mode pour effectuer la localisation des émissions nouvelles à durées courtes et évasion de fréquence en liaison avec un réseau de stations déportées.

12. Equipement selon l'une quelconque des revendications 1 à 11 caractérisé en ce que le dispositif de visualisation (6) permet des visualisations synthétiques des plots de détection des émetteurs, des pistes des émetteurs et est muni d'un clavier d'interface homme-machine.
